# EUROPÄISCHE PATENTANMELDUNG

(11) **EP 1 406 151 A2**
(43) Veröffentlichungstag der Anmeldung: **07.04.2004**
(21) Anmeldenummer: 03012369.9
(22) Anmeldetag: 30.05.2003
(51) Int. Cl.: G06F 3/00, G06F 3/16

(54) **Verfahren und Computervorrichtung zum Darstellen von Fensterflächen auf einem Bildschirm**

(30) Priorität: 02.10.2002 DE 10246292
(71) Anmelder: DictaNet Software AG, 13507 Berlin (DE)
(72) Erfinder: Becker, Dr. Peter, 10437 Berlin (DE); Camacho, Paul Raymond, 13503 Berlin (DE)
(74) Vertreter: Bittner, Thomas L.

(57) **Zusammenfassung**

Die Erfindung betrifft ein Verfahren und eine Computervorrichtung zum Darstellen von Fensterflächen auf einem Bildschirm. Mit Hilfe einer Steuereinrichtung wird fortlaufend ermittelt, welche von mehreren Fensterflächen (21, 22, 23 25) als eine aktive Fensterfläche (21) aktiviert ist, und überprüft, ob in Verbindung mit der aktiven Fensterfläche (21) eine weitere Eingabe des Benutzers ausführbar ist, die mittels der Steuereinrichtung erfaßbar ist und sich auf eine Verarbeitung elektronischer Sprachdaten im Rahmen eines in der Computereinrichtung ausführbaren Anwendungsprogramms bezieht, für das in der aktiven Fensterfläche (21) eine Benutzeroberfläche dargestellt wird. Falls die weitere erfaßte Eingabe in Verbindung mit der aktiven Fensterfläche (21) ausführbar ist, wird auf dem Bildschirm eine Audiodaten-Funktionsfläche (27) in einem Bildschirmvordergrund dargestellt, so daß dem Benutzer der Computereinrichtung eine Auswahl von Bedienfunktionen der Computereinrichtung zum Erzeugen und/oder zum Bearbeiten der elektronischen Sprachdaten zur Verfügung gestellt wird.

## Beschreibung

Die Erfindung liegt auf dem Gebiet grafischer Benutzeroberflähen in Datenverarbeitungsanlagen.

Um Benutzern von Computereinrichtungen eine benutzerorientierte Möglichkeit zum Bedienen der Computereinrichtung zur Verfügung zu stellen, werden in der Regel grafische Benutzeroberflächen genutzt, die auf einem Bildschirm der Computereinrichtung dargestellt werden. Der Begriff Computereinrichtung in der hier verwendeten Bedeutung umfaßt beliebige Arten von Datenverarbeitungsanlagen, wie Personalcomputer in Form von Desktop-Geräten oder mobile Laptops, sogenannte PDA-Geräte (PDA - "Personal Digital Assistent") sowie beliebige Computer, unabhängig davon, ob sie als Einzelgeräte oder im Verbund mit einer beliebigen Form eines Computernetzwerks verwendet werden.

Im Zusammenhang mit den graphischen Benutzeroberflächen, die der Benutzer einer Computereinrichtung zum Bedienen derselben nutzt, werden heute im Rahmen einer "Fenstertechnik" üblicherweise Fensterflächen auf dem Bildschirm dargestellt. Die Fensterflächen sind Bestandteil einer Funktionalität, die auf der Computereinrichtung zur Verfügung gestellt wird. Hierbei werden in den verschiedenen Fensterflächen Benutzeroberflächen von Anwendungsprogrammen dargestellt, die dem Benutzer der Computereinrichtung wiederum die Nutzung der Anwendungsprogramme gestatten, die auf der Computereinrichtung ausführbar sind. Bei den Anwendungsprogrammen kann es sich beispielsweise um ein Textverarbeitungsprogramm, ein Programm zum Handhaben von elektronischer Post oder ein beliebiges anderes Programm handeln. Der Benutzer der Computereinrichtung kann mit Hilfe einer Eingabe über eine Tastatur oder eine Maus beispielsweise Steuerbefehle für das Anwendungsprogramm oder bereits dargestellte Fensterflächen auf dem Bildschirm schließen und neue Fensterflächen öffnen. Eine Fensterfläche kann entweder einen Teil der Bildschirmfläche bedecken oder die Bildschirmfläche vollständig einnehmen. Sind mehrere Fenster auf dem Bildschirm dargestellt, so werden diese entweder in Form einer Überlagerungshierarchie, bei der sich die dargestellten Fensterflächen zumindest teilweise überdecken können, oder nebeneinander dargestellt, so daß sämtliche Fensterflächen vollständig sichtbar sind.

Mit Hilfe der Tastatur oder der Maus kann der Benutzer eine der dargestellten Fensterflächen als eine aktive Fensterfläche auswählen. Befehle, die der Benutzer nach dem Auswählen einer der Fensterflächen als aktive Fensterfläche eingibt, beziehen sich auf das Anwendungsprogramm, dessen Benutzeroberfläche in dem aktiven Fenster dargestellt ist. Eine Form eines Befehls, der in verschiedenen Betriebssystemen auf Computereinrichtungen zur Verfügung gestellt wird, ist die "Drag & Drop"-Funktion. Mit Hilfe dieser Funktion kann der Benutzer ein auf dem Bildschirm dargestelltes Bildelement zwischen Fensterflächen verschieben. Dem Bildelement können mit Hilfe der Steuereinrichtung des Computers beispielsweise gespeicherte Daten oder ein auf der Computereinrichtung ausführbarer Computerprogrammabschnitt zugeordnet sein. Im Fall der Zuordnung gespeicherter Daten können diese mit Hilfe der "Drag/Drop"-Funktion zwischen verschiedenen Fensterflächen verschoben werden, so daß die gespeicherten Daten beispielsweise zwischen zwei Anwendungsprogrammen übergeben werden. Auf diese Weise ist es beispielsweise möglich, Text- und/oder Audiodaten in ein Dokument eines Textverarbeitungsprogramms zu integrieren. In Verbindung mit einem Anwendungsprogramm zum Handhaben elektronischer Post können auf diese Weise gespeicherte Daten in eine Email-Nachricht integriert oder aus dieser herausgelöst werden.

Die Einführung der beschriebenen "Fenstertechnik" in Verbindung mit grafischen Benutzeroberflächen bei Computereinrichtung erleichtert dem Benutzer einerseits den Umgang mit dem Computer. Andererseits kann es dem Benutzer bei umfangreicher Nutzung der Fensterflächen passieren, daß er den Überblick verliert und deshalb eine bestimmte Fensterfläche erst suchen muß, was beispielsweise mittels Schließens und/oder Verschiebens der Fensterflächen ausgeführt wird.

Eine von Benutzern zunehmend gewünschte Form der Eingabe von Informationen in Verbindung mit einer Computereinrichtung ist die Spracheingabe. Spracheingabe-Informationen umfassen hierbei sowohl Eingaben, die die Computereinrichtung dazu veranlassen, bestimmte Funktionen auszuführen, als auch das Erzeugen von elektronischen Sprachdaten, die als elektronische Audiodaten erzeugt, bearbeitet und/oder gespeichert werden. Um elektronische Audiodaten zu erzeugen, verfügt die Computereinrichtung über eine Mikrofoneinrichtung. Um Audiodaten abspielen zu können, ist in der Regel wenigstens ein Lautsprecher vorgesehen. Um eine Bedienung der Funktionen der Computereinrichtung im Zusammenhang mit dem Erzeugen, Bearbeiten und/oder Speichern elektronischer Sprachdaten ermöglichen zu können, wird auf dem Bildschirm der Computereinrichtung eine Audiodaten-Funktionsfläche dargestellt. Die Audiodaten-Funktionsfläche umfaßt eine oder mehrere Teilflächen, auf denen Symbole dargestellt sind. Mit Hilfe der Tastatur oder einer Maus kann der Benutzer die Teilflächen der Audiodaten-Funktionsfläche auswählen, um Funktionen zu nutzen, die die Computereinrichtung zum Erzeugen, Bearbeiten und/oder Speichern elektronischer Sprachdaten zur Verfügung stellt.

Aufgabe der Erfindung ist es, ein verbessertes Verfahren und eine verbesserte Computervorrichtung zum automatischen Darstellen von Fensterflächen auf einem Bildschirm einer Computereinrichtung anzugeben, das (die) dem Benutzer einen effizienteren und erleichterten Umgang mit der Computereinrichtung ermöglicht.

Diese Aufgabe wird durch ein Verfahren nach dem unabhängigen Anspruch 1 und eine Computervorrichtung nach dem unabhängigen Anspruch 7 gelöst.

Die Erfindung sieht insbesondere vor, daß auf dem Bildschirm einer Computereinrichtung eine Audiodaten-Funktionsfläche automatisch dargestellt wird, wenn der Benutzer der Computereinrichtung mit Hilfe der zur Verfügung stehenden Eingabeeinrichtung eine von mehreren auf dem Bildschirm der Computereinrichtung dargestellten Fensterflächen als eine aktive Fensterfläche auswählt, sofern mit Hilfe einer Steuereinrichtung der Computereinrichtung festgestellt wird, daß in Verbindung mit der aktiven Fensterfläche eine Verarbeitung elektronischer Sprachdaten im Rahmen eines in der Computereinrichtung ausführbaren Anwendungsprogramms möglich ist, für das in der aktiven Fensterfläche eine Benutzeroberfläche dargestellt wird. Die Audiodaten-Funktionsfläche wird dann zusammen mit der aktiven Fensterfläche in dem Bildschirmvordergrund automatisch dargestellt. Auf diese Weise steht dem Benutzer die Audiodaten-Funktionsfläche, welche er zum Erzeugen, zum Bearbeiten und/oder zum Speichern von elektronischen Sprachdaten nutzen kann, immer dann automatisch im Bildschirmvordergrund zur Verfügung, wenn er eine der Fensterflächen als die aktive Fensterfläche auswählt, in der eine Aktion betreffend elektronische Sprachdaten ausführbar ist. Beispiele für solche Fensterflächen sind Fenster, in denen die Benutzeroberfläche eines Textbearbeitungsprogramms oder eines Programms zur Handhabung elektronischer Post dargestellt wird.

Für den Benutzer ergibt sich der Vorteil, daß er nicht andere Fensterflächen auf dem Bildschirm schließen muß, um an die Audiodaten-Funktionsfläche zu gelangen, wenn er eine bestimmte der Fensterflächen als die aktive Fensterfläche ausgewählt hat. Ist der Benutzer beispielsweise damit beschäftigt, seine elektronische Post in der aktiven Fensterfläche zu lesen, so kann er mit Hilfe der auch im Bildschirmvordergrund dargestellten Audiodaten-Funktionsfläche als Reaktion auf eine elektronische Nachricht elektronische Sprachdaten unmittelbar erzeugen, die eine sprachliche Reaktion auf die elektronische Post beinhalten. Auf diese Weise kann beispielsweise ein Diktat aufgezeichnet werden, was später abgehört und als Text geschrieben wird. Es kann jedoch auch vorgesehen sein, daß die als Antwort erzeugten elektronischen Sprachdaten selbst an einen anderen Empfänger übersandt werden.

Die Audiodaten-Funktionsfläche wird zweckmäßig jedoch nur in Verbindung mit Fensterflächen automatisch dargestellt, bei denen in Verbindung mit dem jeweiligen Anwendungsprogramm, dessen Benutzeroberfläche in der aktiven Fensterfläche dargestellt wird, eine Verarbeitung elektronischer Sprachdaten möglich ist. Sollte als aktive Fensterfläche eine Fensterfläche ausgewählt und aktiviert werden, bei der eine Verarbeitung elektronischer Sprachdaten nicht möglich ist, so verbleibt die Audiodaten-Funktionsfläche zweckmäßig an der zuletzt aktive Fensterfläche, bei der die Verarbeitung elektronischer Sprachdaten möglich ist.

Eine zweckmäßige Weiterbildung der Erfindung sieht vor, daß die Audiodaten-Funktionsfläche auf dem Bildschirm in einem Bildschirmbereich dargestellt wird, welcher benachbart zu der aktiven Fensterfläche angeordnet ist. Auf diese Weise ist die Orientierung für den Benutzer auf dem Bildschirm erleichtert. Der Zeitaufwand für eine Bewegungen eines Mauszeigers zwischen der aktiven Fensterfläche und der Audiodaten-Funktionsfläche wird so minimiert. Hierbei kann die Audiodaten-Funktionsfläche unmittelbar an die aktive Fensterfläche angrenzen oder in einem Abstand hiervon angeordnet sein.

Eine platzsparende Anordnung der Audiodaten-Funktionsfläche ist bei einer zweckmäßigen Ausgestaltung der Erfindung dadurch erreicht, daß die Audiodaten-Funktionsfläche auf dem Bildschirm als eine Funktionsleiste dargestellt wird. Dieses ermöglicht insbesondere eine Anordnung der Audiodaten-Funktionsfläche entlang eines Randes der aktiven Fensterfläche.

Um dem Benutzer der Computereinrichtung die optische Orientierung auf dem Bildschirm zu erleichtern, sieht eine vorteilhafte Ausführungsform der Erfindung vor, daß die aktive Fensterfläche beim Darstellen in dem Bildschirmvordergrund mit einem Kennzeichenelement gekennzeichnet wird. Hierbei kann es sich um ein farbliches Unterscheidungsmerkmal handeln, welches aktiv ist, sofern eine Fensterfläche als aktive Fensterfläche ausgewählt und aktiviert ist.

Bei einer zweckmäßigen Fortbildung der Erfindung kann vorgesehen sein, daß mittels der Steuereinrichtung andere Eingaben des Benutzers erfaßt werden und als Reaktion auf die anderen erfaßten Eingaben des Benutzers die elektronischen Sprachdaten mit Hilfe einer auf der Computereinrichtung ausführbaren "Drag/Drop"-Funktion zur Verarbeitung in das Anwendungsprogramm integriert oder aus dem Anwendungsprogramm entfernt werden. Hierdurch wird die Benutzerfreundlichkeit unterstützt.

Die Vorteile der automatischen Darstellung der Audiodaten-Funktionsfläche beim Auswählen einer bestimmten Fensterfläche als aktive Fensterfläche ergeben sich insbesondere, wenn mittels des Anwendungsprogramms eine Handhabung elektronischer Post auf der Computereinrichtung ausgeführt wird. Die Zahl der mit Hilfe elektronischer Post ausgetauschten Nachrichten nimmt ständig zu. Bei einer geschäftlichen Nutzung der elektronischen Post müssen Benutzer an einem Tag häufig eine große Anzahl von elektronischen Nachrichten lesen und gegebenenfalls beantworten. Die Abarbeitung der täglichen Post wird mit Hilfe der Erfindung wesentlich erleichtert, da der Benutzer unmittelbar beim Lesen einer elektronischen Nachricht, die in der aktiven Fensterfläche dargestellt wird, hierauf mittels des Erzeugens elektronischer Sprachdaten reagieren kann, die er beispielsweise abspeichert oder im Rahmen einer Antwortnachricht an den Absender übermittelt.

Die Erfindung wird im folgenden anhand von Ausführungsbeispielen unter Bezugnahme auf eine Zeichnung näher erläutert. Hierbei zeigen:
- Figur 1: eine schematische Blockdarstellung einer Computervorrichtung;
- Figur 2: eine Bildschirmfläche, auf der mehrere Fensterflächen dargestellt sind;
- Figur 3: die Bildschirmfläche nach Figur 2, wobei eine Auswahl einer aktiven Fensterfläche geändert ist; und
- Figur 4: die Bildschirmfläche nach Figur 3, wobei die Auswahl der aktiven Fensterfläche geändert ist.

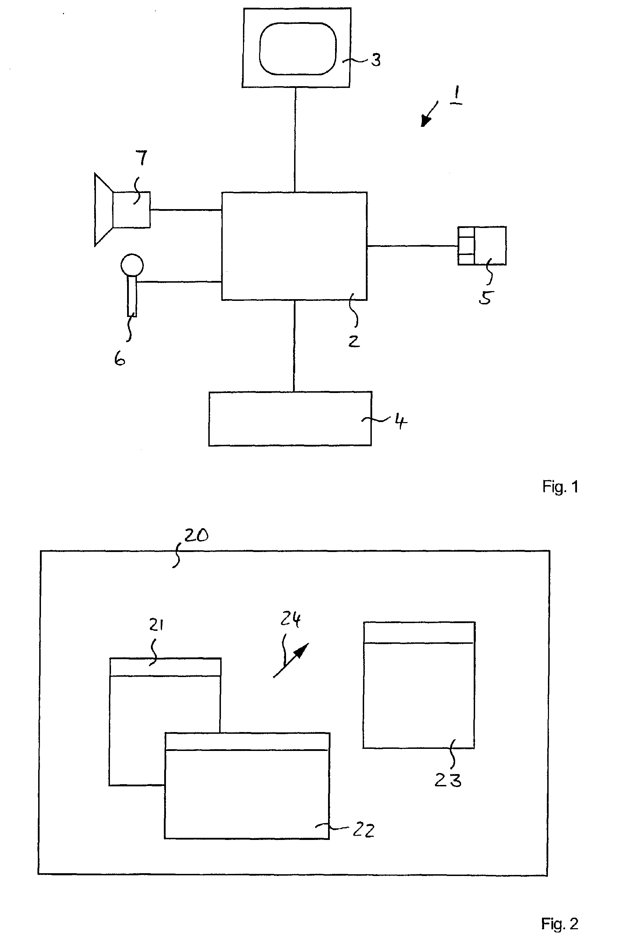

Figur 1 zeigt schematisch eine Computereinrichtung 1 mit einer Steuereinrichtung 2, die einen Mikroprozessor umfaßt. Die Steuereinrichtung 2 ist mit einem Bildschirm 3, einer Tastatur 4 und einer Maus 5 verbunden. Mit Hilfe der Tastatur 4 oder der Maus 5 kann ein Benutzer Eingaben machen, die von der Steuereinrichtung 2 automatisch erfaßt werden. Auf dem Bildschirm 3 wird in Abhängigkeit von einem Betriebssystem, welches für die Nutzung der Computereinrichtung 1 zur Verfügung steht, eine graphische Benutzeroberfläche dargestellt.

Um Audiosignale zu erfassen, ist die Steuereinrichtung 2 gemäß Figur 1 weiterhin mit einem Mikrofon 6 verbunden. Auf diese Weise können Spracheingaben erfaßt und auf ihrer Basis elektronische Audiodaten erzeugt werden. Zu diesem Zweck sind auf der Steuereinrichtung 2 geeignete Computerprogrammittel implementiert. Elektronische Audiodaten können mit Hilfe eines Lautsprechers 7 ausgegeben werden, der ebenfalls an die Steuereinrichtung 2 gekoppelt ist.

Figur 2 zeigt schematisch die Darstellung auf dem Bildschirm 3 für eine typische Situation der Nutzung der Computereinrichtung 1. Gemäß Figur 2 sind auf einer Desktop-Fensterfläche 20 mehrere Fensterflächen 21, 22, 23 dargestellt. Die Desktop-Fensterfläche 20 entspricht einer üblichen Benutzeroberfläche, wie sie beispielsweise bei dem Betriebssystem WINDOWS zur Verfügung gestellt wird. In Abhängigkeit vom Anwendungsfall kann der Benutzer mit Hilfe der Tastatur 4 oder der Maus 5 Fensterflächen auf der Desktop-Fensterfläche 20 erzeugen, verlagern, vergrößern/verkleinern oder löschen. Mit Hilfe des Öffnens einer Fensterfläche wird in der Regel ein auf der Computereinrichtung 1 ausführbares Anwendungsprogramm gestartet, dessen Benutzeroberfläche dann in der geöffneten Fensterfläche dargestellt wird. Gemäß Figur 2 können die Fensterflächen 21-23 nebeneinander oder teilweise überlappend dargestellt werden. Um die Eingaben des Benutzers mit Hilfe der Maus 5 einer bestimmten der mehreren Fensterflächen 21-23 zuordnen zu können, ist ein Mauszeiger 24 vorgesehen, wie er in Verbindung mit graphischen Benutzeroberflächen üblich ist.

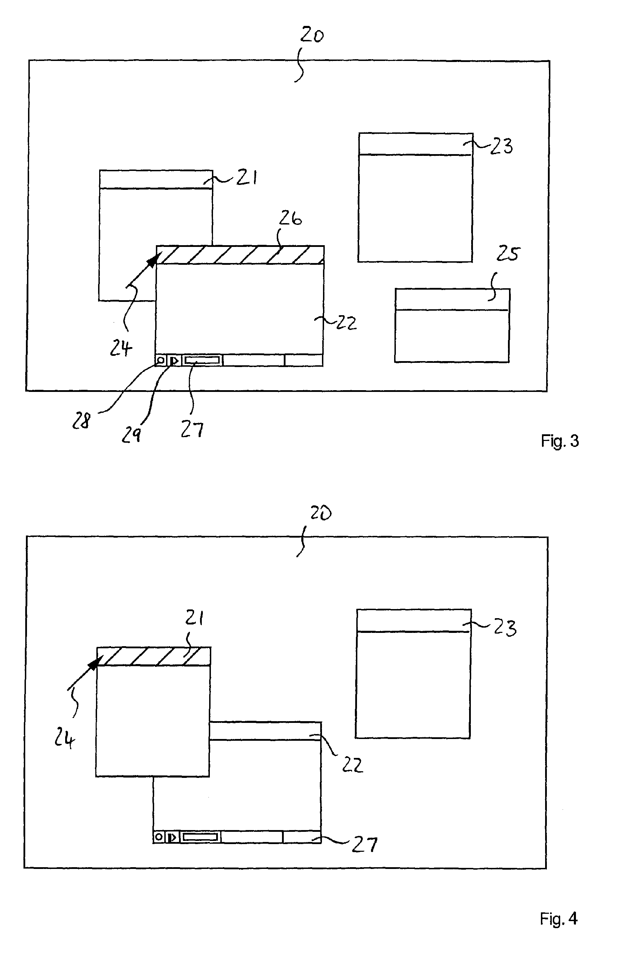

Figur 3 zeigt schematisch die Anordnung der mehreren Fensterflächen 21-23 nach Figur 2, wobei eine zusätzliche Fensterfläche 25 geöffnet ist. Der Benutzer hat mit Hilfe des Mauszeigers 24 die Fensterfläche 22 als aktive Fensterfläche ausgewählt. Um dem Benutzer der Computereinrichtung 1 diese Auswahl anzuzeigen, ist ein oberer Bereich 26 der Fensterfläche 22 im Vergleich zu den anderen Fensterflächen 21, 23, 25 markiert.

Mit Hilfe der Steuereinrichtung 2 wird in festgelegten Zeitabständen überprüft, welche der Fensterflächen 21-23, 25 als aktive Fensterfläche von dem Benutzer der Computereinrichtung 1 ausgewählt ist. Der Zeitabstand zwischen den Überprüfungen ist zweckmäßig kürzer als eine Zeit zu wählen, die zwischen schnell aufeinanderfolgenden Aktionen des Benutzers zum Wechseln zwischen den Fensterflächen 21-23, 25 vergehen kann. Beispielsweise kann die Überprüfung alle zehn Sekunden erfolgen. Zum Zweck der Überprüfung werden mit Hilfe der Steuereinrichtung 2 elektronische Informationen ausgewertet, die von dem Betriebssystem zur Verfügung gestellt werden, mit dem die Computereinrichtung 1 betrieben wird. Die Steuereinrichtung 2 kann hierbei auf übliche Funktionen des jeweiligen Betriebssystems zurückgreifen. Wenn es sich um das Betriebssystem WINDOWS handelt, kann die Funktion "Get-ForegroundWindow" hierfür genutzt werden. Nachdem die aktive Fensterfläche (Fensterfläche 22 in Figur 3) ermittelt wurde, überprüft die Steuereinrichtung 2, ob in Verbindung mit einem Anwendungsprogramm, dessen Benutzeroberfläche in dem aktiven Fenster dargestellt wird, elektronische Sprachdaten verarbeitet werden können. Der Begriff der Verarbeitung elektronischer Sprachdaten umfaßt hierbei eine Übergabe der elektronischen Sprachdaten an das Anwendungsprogramm, derart, daß die elektronischen Sprachdaten mit einer beliebigen Funktion des Anwendungsprogramms weiterverarbeitet werden können. Die Weiterverarbeitung kann beispielsweise eine Speicherung oder eine Integration in eine vorhandene Datei umfassen. Bei Verwendung des Betriebssystems WINDOWS kann die Überprüfung zum Beispiel eine Prüfung dahingehend umfassen, ob die Fensterfläche vom "WS_EX_AcceptFiles"-Form ist. In diesem Fall kann die "Drag/Drop"-Funktion ausgeführt werden. Wenn die Steuereinrichtung 2 feststellt, daß eine Verarbeitung von elektronischen Sprachdaten mit Hilfe des Anwendungsprogramms, was dem aktiven Fenster zugeordnet ist, möglich ist, veranlaßt die Steuereinrichtung 2 automatisch die Darstellung einer Audiodaten-Funktionsfläche 27 (vgl. Figur 3). Die auf diese Weise dargestellte Audiodaten-Funktionsfläche 27 umfaßt Symbole 28, 29, welche der Benutzer mit Hilfe der Tastatur 4 oder der Maus 5 auswählen kann, um Funktionen auszulösen, die im Zusammenhang mit dem Erzeugen, Bearbeiten und/oder Speichern von elektronischen Sprachdaten stehen. Beispielsweise kann durch eine Betätigung des Symbols 28 eine Aufnahme von Sprachdaten über das Mikrofon 6 veranlaßt werden. Darüber hinaus können das Abspeichern von elektronischen Sprachdaten oder das Abspielen elektronischer Sprachdaten über den Lautsprecher 7 vorgesehen sein. Die Audiodaten- Funktionsfläche 27 sieht üblicherweise auch Symbole vor, deren Betätigung das Vorspulen und/oder Zurückspulen innerhalb der elektronischen Sprachdaten veranlaßt. Grundsätzlich können innerhalb der Audiodaten-Funtktionsfläche 27 sämtliche Symbole dargestellt werden, die in Verbindung mit Anwendungsprogrammen zum Aufzeichnen, zum Speichern oder zum sonstigen Bearbeiten von elektronischen Sprachdaten zur Verfügung gestellt werden.

Figur 4 zeigt schematisch die Anordnung der mehreren Fensterflächen, wobei im Vergleich zu Figur 3 die Fensterfläche 25 geschlossen wurde. Darüber hinaus wurde anstelle der Fensterfläche 22 die Fensterfläche 21 als aktive Fensterfläche ausgewählt ist. Da die Steuereinrichtung 2 im Rahmen ihrer fortdauernden Abfrage des Betriebsystems der Computereinrichtung 1 festgestellt hat, daß in Verbindung mit dem Anwendungsprogramm, dessen momentane Benutzeroberfläche in der Fensterfläche 21 dargestellt wird, keine elektronischen Sprachdaten verarbeitet werden können, verbleibt die Audiodaten-Funktionsfläche 27 bei der Fensterfläche 22, obwohl die Fensterfläche 21 als aktive Fensterfläche ausgewählt wurde.

Die in der vorstehenden Beschreibung, den Ansprüchen und der Zeichnung offenbarten Merkmale der Erfindung können sowohl einzeln als auch in beliebiger Kombination für die Verwirklichung der Erfindung in ihren verschiedenen Ausführungsformen von Bedeutung sein.

## Patentansprüche

1. Verfahren zum Darstellen von Fensterflächen auf einem Bildschirm (3) einer Computereinrichtung (1), die eine Eingabeeinrichtung (4; 5) und eine Steuereinrichtung (2) umfaßt, wobei bei dem Verfahren:
- mehrere Fensterflächen (21, 22, 23, 25) auf dem Bildschirm (3) dargestellt werden;
- eine Eingabe eines Benutzers über die Eingabeeinrichtung (4; 5) zur Auswahl von einer der mehreren Fensterflächen (21, 22, 23, 25) mit Hilfe der Steuereinrichtung (2) erfaßt wird; und
- als Reaktion auf die erfaßte Auswahl die eine der mehreren Fensterflächen (21, 22, 23, 25) mit Hilfe der Steuereinrichtung (2) als eine aktive Fensterfläche (21) aktiviert wird, so daß die eine der mehreren Fensterflächen (21, 22, 23, 25) auf einem Bildschirmvordergrund dargestellt wird;
wobei mit Hilfe der Steuereinrichtung (2) fortlaufend ermittelt wird, welche der mehreren Fensterflächen (21, 22, 23, 25) als aktive Fensterfläche (21) aktiviert ist, und geprüft wird, ob in Verbindung mit der aktiven Fensterfläche (21) eine weitere Eingabe des Benutzers ausführbar ist, die mittels der Steuereinrichtung (2) erfaßbar ist und sich auf eine Verarbeitung elektronischer Sprachdaten im Rahmen eines in der Computereinrichtung (1) ausführbaren Anwendungsprogramms bezieht, für das in der aktiven Fensterfläche (21) eine Benutzeroberfläche dargestellt wird, und wobei, falls die weitere erfaßbare Eingabe in Verbindung mit der aktiven Fensterfläche (21) ausgeführt werden kann, eine Audiodaten-Funktionsfläche (27) in dem Bildschirmvordergrund dargestellt wird, so daß dem Benutzer eine Auswahl von Bedienfunktionen der Computereinrichtung (1) zum Erzeugen und/oder zum Bearbeiten der elektronischen Sprachdaten zur Verfügung gestellt wird.

2. Verfahren nach Anspruch 1, **dadurch gekennzeichnet, daß** die Audiodaten-Funktionsfläche (27) auf dem Bildschirm (3) in einem Bildschirmbereich dargestellt wird, welcher benachbart zu der aktiven Fensterfläche (21) angeordnet ist.

3. Verfahren nach Anspruch 1 oder 2, **dadurch gekennzeichnet, daß** Audiodaten-Funktionsfläche (27) auf dem Bildschirm (3) als eine Funktionsleiste dargestellt wird.

4. Verfahren nach einem der vorangehenden Ansprüche, **dadurch gekennzeichnet, daß** die aktive Fensterfläche (21) beim Darstellen in dem Bildschirmvordergrund mit einem Kennzeichenelement (26) gekennzeichnet wird.

5. Verfahren nach einem der vorangehenden Ansprüche, **dadurch gekennzeichnet, daß** mittels der Steuereinrichtung (2) andere Eingaben des Benutzers erfaßt werden und als Reaktion auf die anderen erfaßten Eingaben des Benutzers die elektronischen Sprachdaten mit Hilfe einer auf der Computereinrichtung (1) ausführbaren "Drag/Drop"-Funktion zum Verarbeiten in das Anwendungsprogramm integriert oder aus dem Anwendungsprogramm entfernt werden.

6. Verfahren nach einem der Ansprüche 5, **dadurch gekennzeichnet, daß** mittels des Anwendungsprogramms eine Handhabung elektronischer Post auf der Computereinrichtung (1) ausgeführt wird.

7. Computervorrichtung (1) mit:
- einem Bildschirm (3) zum Darstellen von mehreren Fensterflächen (21, 22, 23, 25);
- einer Eingabeeinrichtung (4; 5), mit welcher ein Benutzer Eingaben erzeugen kann; und
- einer Steuereinrichtung (2), wobei die Steuereinrichtung (2) die folgenden Merkmale aufweist:
- Erfassungsmittel zum Erfassen einer Eingabe des Benutzers über die Eingabeeinrichtung (4; 5) zur Auswahl einer der mehreren Fensterflächen (21, 22, 23, 25) auf dem Bildschirm (3);
- Aktivierungsmittel, um als Reaktion auf die erfaßte Auswahl die eine der mehreren Fensterflächen (21, 22, 23, 25) als eine aktive Fensterfläche (21) zu aktivieren, so daß die eine der mehreren Fensterflächen (21, 22, 23, 25) in einem Bildschirmvordergrund dargestellt werden kann;
- Prüfinittel zum fortlaufenden Ermitteln, welche der mehreren Fensterflächen (21, 22, 23, 25) als aktive Fensterfläche (21) aktiviert ist;
- weitere Prüfmittel zum Prüfen, ob in Verbindung mit der aktiven Fensterfläche (21) eine weitere Eingabe des Benutzers ausführbar ist, die mit Hilfe der Erfassungsmittel erfaßt werden kann und sich auf eine Verarbeitung elektronischer Sprachdaten im Rahmen eines ausführbaren Anwendungsprogramms bezieht, für das in der aktiven Fensterfläche (21) eine Benutzeroberfläche dargestellt wird;
- Erzeugungsmittel zum Erzeugen einer Audiodaten-Funktionsfläche (27) in dem Bildschirmvordergrund, so daß dem Benutzer eine Auswahl von Bedienfunktionen zum Erzeugen und/oder zum Bearbeiten der elektronischen Sprachdaten mit Hilfe der Steuereinrichtung (2) zur Verfügung gestellt werden kann, falls mit Hilfe der weiteren Prüfmittel festgestellt wird, daß die weitere erfaßte Eingabe in Verbindung mit der aktiven Fensterfläche (21) ausführbar ist.
